(19) Europäisches Patentamt
European Patent Office
Office européen des brevets

(11) **EP 4 583 202 A1**

(12) **EUROPEAN PATENT APPLICATION**

(43) Date of publication:
**09.07.2025 Bulletin 2025/28**

(21) Application number: **24219247.4**

(22) Date of filing: **11.12.2024**

(51) International Patent Classification (IPC):
*H01M 4/36* (2006.01)   *H01M 4/38* (2006.01)
*H01M 4/48* (2010.01)   *H01M 10/0525* (2010.01)
*H01M 4/02* (2006.01)

(52) Cooperative Patent Classification (CPC):
**H01M 4/362; H01M 4/386; H01M 4/483;**
**H01M 10/0525;** H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.12.2023 KR 20230178820**

(71) Applicants:
• **SK On Co., Ltd.**
**Seoul 03161 (KR)**

• **SK innovation Co., Ltd.**
**Seoul 03188 (KR)**

(72) Inventors:
• **MOON, Joon Hyung**
**Daejeon 34124 (KR)**
• **LA, Yun Ji**
**Daejeon 34124 (KR)**
• **KIM, Eun Hyo**
**Daejeon 34124 (KR)**

(74) Representative: **Stolmár & Partner**
**Patentanwälte PartG mbB**
**Blumenstraße 17**
**80331 München (DE)**

(54) **ANODE ACTIVE MATERIAL FOR LITHIUM SECONDARY BATTERY AND LITHIUM SECONDARY BATTERY INCLUDING THE SAME**

(57)    An anode active material for a lithium secondary battery comprising magnesiumsilicon composite oxide particles comprising $MgSiO_3$ and silicon and having a ratio of magnesium to total magnesium, silicon, and oxygen of about 0.07 to about 0.17. A secondary lithium battery comprising the anode active material is provided having enhanced capacity and lifespan.

[FIG. 1]

EP 4 583 202 A1

**Description**

**1. Field**

The disclosure of the present application relates to an anode active material for a lithium secondary battery and a lithium secondary battery including the same.

**2. Description of the Related Art**

A secondary battery is a battery that can be repeatedly charged and discharged. With rapid progress of information and communication, and display industries, the secondary battery has been widely applied to various portable electronic telecommunication devices such as camcorders, mobile phones, and laptop computers as power sources. Recently, a battery pack including a secondary battery has also been developed and used in eco-friendly automobiles, such as electric vehicles, hybrid vehicles, etc., as a power source.

Examples of secondary batteries include the lithium secondary battery, the nickelcadmium battery, the nickel-hydrogen battery and the like. Among them, the lithium secondary battery has a high operating voltage and a high energy density per unit weight and is advantageous in terms of a charging speed and light weight.

As applications using the lithium secondary battery are expanded, demand for development for a lithium secondary battery having a higher capacity and output has risen. For example, a silicon-based material such as a silicon oxide with high capacity has been used as an anode active material.

However, when the silicon oxide is used as the anode active material, a large amount of gas is generated in an aqueous slurry state and lifespan characteristics of the lithium secondary battery may be decreased. Accordingly, there is a need in the art for further development to overcome the challenges faced when developing anode active materials with sufficient capacity characteristics.

**3. Summary**

In one aspect, the present disclosure provides an anode active material for a lithium secondary battery, which may have improved initial efficiency, capacity characteristics, and lifespan characteristics.

In another aspect, the present disclosure provides a lithium secondary battery including the anode active material, which may have improved initial efficiency, capacity characteristics, and lifespan characteristics.

In one embodiment, an anode active material for a lithium secondary battery comprises magnesium-silicon composite oxide particles, wherein the magnesium-silicon composite oxide particles comprise $MgSiO_3$ and silicon, and are characterized by a first element content ratio of about 0.07 to about 0.17, as defined by Equation 1:

$$[\text{Equation 1}]$$

$$\text{First element content ratio} = C_{Mg}/(C_{Mg} + C_{Si} + C_O),$$

wherein:

C_{Mg} is a content by weight of magnesium in the magnesium-silicon composite oxide particles and based on the total weight of the magnesium-silicon composite oxide particles;

C_{Si} is a content by weight of silicon in the magnesium-silicon composite oxide particles based on the total weight of the magnesium-silicon composite oxide particles; and

Co is a content by weight of oxygen in the magnesium-silicon composite oxide particles based on the total weight of the magnesium-silicon composite oxide particles.

In one embodiment, the first element content ratio is about 0.09 to about 0.15. In one embodiment, the first element content ratio is about 0.07 to about 0.11. In one embodiment, the $C_{Mg}$ and $C_{Si}$ are each measured through inductively coupled plasma (ICP) analysis and Co is measured through elemental analysis (EA).

In one embodiment, the magnesium-silicon composite oxide particles are characterized by a second element content ratio of about 0.8 to about 1.8, as defined by Equation 2:

$$[\text{Equation 2}]$$

$$\text{Second element content ratio} = C_{Si}/C_O.$$

In one embodiment, the second element content ratio is about 1.2 to about 1.6.

In one embodiment, the magnesium-silicon composite oxide particles further comprise $Mg_2SiO_4$. In one embodiment, the magnesium-silicon composite oxide particles are characterized by a phase fraction ratio of about 0.4 to about 0.6, as defined by Equation 3:

$$[\text{Equation 3}]$$

$$\text{Phase fraction ratio} = P(MS)/(P(MS)+P(Si)),$$

wherein:

P(MS) is a sum of a phase fraction of the $MgSiO_3$ and a phase fraction of the $Mg_2SiO_4$ in the magnesium-silicon composite oxide particles; and

P(Si) is a phase fraction of the silicon in the magnesium-silicon composite oxide particles. In one embodiment, the phase fraction of the $MgSiO_3$, $Mg_2SiO_4$, and silicon are obtained by the Rietveld refinement method. In one embodiment, the phase fraction ratio is about 0.45 to about 0.56.

In one embodiment, the magnesium-silicon composite oxide particles further include a carbon coating formed on a surface portion thereof. In one embodiment, the anode active material further comprises graphite-based particles. In one embodiment, the graphite-based particles include at least one selected from the group consisting of natural graphite and artificial graphite.

In another aspect, the present disclosure provides a lithium secondary battery comprising:

a cathode; and
an anode facing the cathode and comprising the anode active material characterized by a first element content ratio of about 0.07 to about 0.17.

In another aspect, the present disclosure provides an anode active material for a lithium secondary battery, the anode active material comprising magnesium-silicon composite oxide particles, wherein the magnesium-silicon composite oxide particles comprise $MgSiO_3$, $Mg_2SiO_4$, and silicon, and are characterized by at least two of the following:

a) a first element content ratio according to Equation 1 of about 0.07 to about 0.17;
b) a second element ratio according to Equation 2 of about 0.8 to about 1.8; and
c) a phase fraction ratio according to Equation 3 of about 0.4 to about 0.6.

In one embodiment, the magnesium-silicon composite oxide particles are characterized by each of a), b), and c). In one embodiment, the magnesium-silicon composite oxide particles are characterized by a first element content ratio of about 0.07 to about 0.11.

In one embodiment, the magnesium-silicon composite oxide particles are characterized by at least two of the following:

a) a first element content ratio of about 0.09 to about 0.15;
b) a second element ratio of about 1.2 to about 1.6; and
c) a phase fraction ratio of about 0.45 to about 0.56.

In one embodiment, the magnesium-silicon composite oxide particles are characterized by all three of a), b), and c).

In another aspect, the present disclosure provides a lithium secondary battery comprising:

a cathode; and
an anode facing the cathode and comprising the anode active material characterized by two or more of:

a) a first element content ratio according to Equation 1 of about 0.07 to about 0.17;
b) a second element ratio according to Equation 2 of about 0.8 to about 1.8; and
c) a phase fraction ratio according to Equation 3 of about 0.4 to about 0.6;

or two or more of:

a) a first element content ratio of about 0.09 to about 0.15;
b) a second element ratio of about 1.2 to about 1.6; and
c) a phase fraction ratio of about 0.45 to about 0.56.

By constructing a secondary lithium battery with an anode active material as disclosed herein, the structural stability of the secondary battery may be improved. Further, in certain embodiments, the initial efficiency, discharge capacity and lifespan characteristics of the secondary battery may be improved.

The anode active material for a lithium secondary battery and the lithium secondary battery including the same of the present disclosure may be widely applied to green technology fields such as an electric vehicle, and a battery charging station, as well as other solar power generation and wind power generation using the batteries. The anode active material for a lithium secondary battery and the lithium secondary battery including the same of the present disclosure may be used in an eco-friendly electric vehicle, and a hybrid vehicle, etc., which are intended to prevent climate change by suppressing air pollution and greenhouse gas emissions.

## 4. Brief Description of the Drawings

The above and other objects, features and other advantages of the present invention will be more clearly understood from the following detailed description taken in conjunction with the accompanying drawings, in which:

FIG. 1 is a schematic plan view illustrating a lithium secondary battery according to exemplary embodiments.
FIG. 2 is a cross-sectional view illustrating a lithium secondary battery according to exemplary embodiments.

## 5. Detailed Description

The embodiments of the present disclosure provide an anode active material for a lithium secondary battery (hereinafter, abbreviated as an "anode active material") including magnesium (Mg)-silicon (Si) composite oxide particles. In addition, a lithium secondary battery (hereinafter, abbreviated as a "secondary battery") including the anode active material for a lithium secondary battery is provided.

Hereinafter, embodiments of the present disclosure will be described in detail. However, these embodiments are merely an example, and the present disclosure is not limited to the specific embodiments described as the example.

Throughout the specification, when an element "includes" or "comprises" a component, this means that the portion may further include other components, rather than excluding other components, unless the context particularly describes otherwise. In addition, singular forms of an element or aspect include the plural forms of the element or aspect as well, unless the context clearly indicates otherwise.

Use of the term "about" herein refers to the nominal value plus or minus 5% of that nominal value. For example, "about 100" refers to a value of 95 to 105.

In certain embodiments, the anode active material for a lithium secondary battery includes magnesium-silicon composite oxide particles. In one embodiment, the anode active material may further include a silicon oxide ($SiO_x$, wherein $0 < x \leq 2$. Advantageously, the lithium secondary batteries manufactured using the anode active material with the properties disclosed herein have enhanced output and capacity characteristics, e.g., compared to those with different properties or those currently commercially available.

The magnesium-silicon composite oxide particles in the anode active materials include magnesium silicate ($MgSiO_3$) and silicon. In some embodiments, the magnesium-silicon composite oxide particles may optionally further include magnesium orthosilicate ($Mg_2SiO_4$). Without wishing to be bound by theory, it is believed that inclusion of $MgSiO_3$ and/or $Mg_2SiO_4$ in the magnesium-silicon composite oxide particles of the anode active material may minimize the expansion of silicon, thereby improving the structural stability of the secondary battery. In turn, the initial capacity efficiency, initial discharge capacity, and/or lifespan characteristics, such as capacity retention rate, of the secondary battery may be improved.

The $MgSiO_3$, $Mg_2SiO_4$ and silicon may be present in the magnesium-silicon composite oxide particles in any crystal phase, which may be the same or different from one another. For example, in one embodiment, the $MgSiO_3$, $Mg_2SiO_4$ and silicon in the magnesium-silicon composite oxide particles exhibit different crystal phases. In one embodiment, the silicon exhibits a separate crystal phase different from that of the silicon element in $MgSiO_3$ and/or $Mg_2SiO_4$.

The $MgSiO_3$, $Mg_2SiO_4$ and silicon may be present in the magnesium-silicon composite oxide particles in varying amounts. In exemplary embodiments, the magnesium-silicon composite oxide particles may be characterized by a first element content ratio, which is defined by Equation 1 below, of about 0.07 to about 0.17, and in some embodiments, about 0.09 to about 0.15.

## [Equation 1]

$$\text{First element content ratio} = C_{Mg}/(C_{Mg}+C_{Si}+C_O)$$

In Equation 1, $C_{Mg}$ is the content by weight of magnesium in the magnesium-silicon composite oxide particles based on the total weight of the magnesium-silicon composite oxide particles. $C_{Si}$ is the content by weight of silicon in the magnesium-silicon composite oxide particles based on the total weight of the magnesium-silicon composite oxide particles. Co is the content by weight of oxygen in the magnesium-silicon composite oxide particles based on the total weight of the magnesium-silicon composite oxide particles. Accordingly, the first element content ratio directly or indirectly represents the magnesium content relative to the silicon and the oxygen content in the magnesium-silicon composite oxide particles.

In certain embodiments, the first element content ratio is about 0.07 to about 0.17, about 0.08 to about 0.16, or about 0.09 to about 0.15. In certain embodiments, the first element content ratio is about 0.07, about 0.08, about 0.09, about 0.10, about 0.11, about 0.12, about 0.13, about 0.14, about 0.15 or about 0.16. In certain embodiments, the first element content ratio is about 0.07 to about 0.11. In certain embodiments, the first element content ratio is about 0.07, about 0.08, about 0.09, about 0.10, or about 0.11.

In certain embodiments, it has been observed that, if the first element content ratio is less than about 0.07, the stability, initial efficiency, and lifespan of the secondary lithium battery may be decreased due to the presence of SiO. In other embodiments, it has been observed that, if the first element content ratio exceeds about 0.17, magnesium-silicon composite oxide particles may crack due to the high magnesium content, and therefore lead to reduced lifespan.

A skilled artisan will be familiar with various methods for measuring magnesium, silicon, and oxygen content of a material. For example, in some embodiments, $C_{Mg}$ and $C_{Si}$ of Equation 1 above may be measured through inductively coupled plasma (ICP) analysis and Co may be measured through elemental analysis (EA).

In some embodiments, the magnesium-silicon composite oxide particles may be characterized or further characterized by a second element content ratio, which is defined by Equation 2 below, of about 0.8 to about 1.8, and in some embodiments, about 1.2 to about 1.6.

## [Equation 2]

$$\text{Second element content ratio} = C_{Si}/C_O$$

In Equation 2, $C_{Si}$ and $C_O$ are the same as defined for Equation 1.

As will be recognized by one of skill in the art, as the second element content ratio of the magnesium-silicon composite oxide particles increases, the oxidized portion of the magnesium-silicon composite oxide particles decreases.

When the magnesium-silicon composite oxide particles exhibit a second element content ratio range of about 0.8 to about 1.8, and in some embodiments, about 1.2 to about 1.6, the capacity and initial efficiency derived from the silicon may be increased, and at the same time, exhibit improved lifespan characteristics through the oxidized portion.

In certain embodiments, the second element content ratio is about 0.8 to about 1.8, about 0.9 to about 1.7, about 1.0 to about 1.6, about 1.1 to about 1.6, or about 1.2 to about 1.6. In certain embodiments, the first element content ratio is about 0.8, about 0.9, about 1.0, about 1.1, about 1.2, about 1.3, about 1.4, about 1.5, about 1.6, about 1.7, or about 1.8. In certain embodiments, the first element content ratio is about 1.2 to about 1.6. In certain embodiments, the first element content ratio is about 1.4.

In certain embodiments, the magnesium-silicon composite oxide particles in an anode active material exhibit a first element content ratio of about 0.07 to about 0.17 and a second element ratio of about 0.8 to about 1.8. In certain embodiments, the magnesium-silicon composite oxide particles in an anode active material exhibit a first element content ratio of about 0.07 to about 0.17 and a second element ratio of about 1.2 to about 1.6. In certain embodiments, the magnesium-silicon composite oxide particles in an anode active material exhibit a first element content ratio of a about 0.09 to about 0.15 and a second element ratio of about 0.8 to about 1.8. In certain embodiments, the magnesium-silicon composite oxide particles in an anode active material exhibit a first element content ratio of about 0.09 to about 0.15 and a second element ratio of about 0.8 to about 1.8. In certain embodiments, the magnesium-silicon composite oxide particles in an anode active material exhibit a first element content ratio of about 0.07 to about 0.11 and a second element ratio of about 0.8 to about 1.8. In certain embodiments, the magnesium-silicon composite oxide particles in an anode active material exhibit a first element content ratio of about 0.07 to about 0.11 and a second element ratio of about 1.2 to about 1.6.

In some embodiments, the magnesium-silicon composite oxide particles may be characterized or further characterized by a phase fraction ratio, which is defined by Equation 3 below, of about 0.4 to about 0.6, and in some embodiments, about 0.45 to about 0.56.

[Equation 3]

$$\text{Phase fraction ratio} = P(MS)/(P(MS)+P(Si))$$

In Equation 3, P(MS) is a sum of the phase fraction of the $MgSiO_3$ and the phase fraction of the $Mg_2SiO_4$, which may be obtained by the Rietveld refinement method of X-ray diffraction (XRD) data. P(Si) is the phase fraction of the silicon, which also may be obtained by the Rietveld refinement method. According to the Rietveld analysis method, a phase fraction and/or lattice structure may be measured by comparing the XRD pattern acquired by obtaining an XRD pattern of a sample whose structural information is known. If the analyzed material contains two or more crystal phases, the phase fraction of each phase may be determined by assuming that the sum of all phase fractions is 100%. For example, after obtaining an XRD pattern of a sample, the phase fraction and/or lattice structure of each phase in that sample may be identified by comparing the XRD pattern with the known diffraction pattern of the material registered in an online database.

For example, the phase fraction of each of Si, $MgSiO_3$, and $Mg_2SiO_4$ may be measured based on the reference codes ICSD 98-024-6975 for Si, ICSD 98-000-5203 for $MgSiO_3$, and ICSD 98-000-9685 for $Mg_2SiO_4$, respectively, which are registered in the online database (Inorganic Crystal Structure Database, ICSD, https://icsd.products.fiz-karlsruhe.de/en/products/icsd-products). For example, peaks corresponding to Si may be at one or more of about 28.2°, 47.0° and 55.7° 2θ, peaks corresponding to $MgSiO_3$ may be at one or more of about 36.9°, 53.0°, 53.4° and 67.4° 2θ, and peaks corresponding to $Mg_2SiO_4$ may be at one or more of about 22.9°, 32.3°, 36.5° and 52.3° 2θ.

In certain embodiments, the magnesium-silicon composite oxide particles in an anode active material exhibit a phase fraction ratio of about 0.4 to about 0.6, about 0.41 to about 0.59, about 0.42 to about 0.58, about 0.43 to about 0.57, or about 0.44 to about 0.56, or about 0.45 to about 0.56. In certain embodiments, the magnesium-silicon composite oxide particles in an anode active material exhibit a phase fraction ratio of about 0.4, about 0.41, about 0.42, about 0.43, about 0.44, about 0.45, about 0.46, about 0.47, about 0.48, about 0.49, about 0.50, about 0.51, about 0.52, about 0.53, about 0.54, about 0.55, about 0.56, about 0.57, about 0.58, about 0.59, or about 0.60. In certain embodiments, the magnesium-silicon composite oxide particles in an anode active material exhibit a phase fraction ratio of about 0.4 to about 0.6, about 0.41 to about 0.59, about 0.42 to about 0.58, about 0.43 to about 0.57, or about 0.44 to about 0.56, or about 0.45 to about 0.56.

Without wishing to be bound by theory, it has been observed, in some embodiments, that magnesium-silicon composite oxide particles in the anode active material and having a phase fraction ratio range of about 0.4 to about 0.6, and in some embodiments, about 0.45 to about 0.56, the $MgSiO_3$ crystal phase and the $Mg_2SiO_4$ crystal phase in the magnesium-silicon composite oxide particles are present in a ratio that decreases volume expansion of the Si crystal phase and silicon, and enhances the output characteristics and capacity characteristics of the secondary battery.

In certain embodiments, even if the phase fraction ratios of two samples of magnesium-silicon composite oxide particles are substantially the same as or similar to each other, when the first element content ratio and/or the second element content ratio of the magnesium-silicon composite oxide particles are different, the initial efficiency, discharge capacity and lifespan characteristics of the secondary battery into which the magnesium-silicon composite oxide particles are incorporated may be different from each other.

For example, in certain embodiments, the magnesium-silicon composite oxide particles in an anode active material exhibit a first element content ratio of about 0.07 to about 0.17 and a phase fraction ratio of about 0.4 to about 0.6. In certain embodiments, the magnesium-silicon composite oxide particles exhibit a first element content ratio of about 0.07 to about 0.17 and a phase fraction ratio of about 0.45 to about 0.56. In certain embodiments, the magnesium-silicon composite oxide particles exhibit a first element content ratio of a about 0.09 to about 0.15 and a phase fraction ratio of about 0.4 to about 0.6. In certain embodiments, the magnesium-silicon composite oxide particles exhibit a first element content ratio of about 0.09 to about 0.15 and a phase fraction ratio of about 0.45 to about 0.56. In certain embodiments, the magnesium-silicon composite oxide particles exhibit a first element content ratio of about 0.07 to about 0.11 and a phase fraction ratio of about 0.4 to about 0.6. In certain embodiments, the magnesium-silicon composite oxide particles exhibit a first element content ratio of about 0.07 to about 0.11 and a phase fraction ratio of about 0.45 to about 0.56.

In certain embodiments, the magnesium-silicon composite oxide particles in an anode active material exhibit a first element content ratio of about 0.07 to about 0.17, a second element ratio of about 0.8 to about 1.8, and a phase fraction ratio of about 0.4 to about 0.6. In certain embodiments, the magnesium-silicon composite oxide particles exhibit a first element content ratio of about 0.07 to about 0.17, a second element ratio of about 0.8 to about 1.8, and a phase fraction ratio of about 0.45 to about 0.56. In certain embodiments, the magnesium-silicon composite oxide particles exhibit a first element content ratio of a about 0.09 to about 0.15, a second element ratio of about 0.8 to about 1.8, and a phase fraction ratio of about 0.4 to about 0.6. In certain embodiments, the magnesium-silicon composite oxide particles exhibit a first element content ratio of about 0.09 to about 0.15, a second element ratio of about 0.8 to about 1.8, and a phase fraction ratio of about 0.45 to about 0.56.

In certain embodiments, the magnesium-silicon composite oxide particles in an anode active material exhibit a first element content ratio of about 0.07 to about 0.17, a second element ratio of about 1.2 to about 1.6, and a phase fraction ratio of about 0.4 to about 0.6. In certain embodiments, the magnesium-silicon composite oxide particles exhibit a first element content ratio of about 0.07 to about 0.17, a second element ratio of about 1.2 to about 1.6, and a phase fraction ratio of about 0.45 to about 0.56. In certain embodiments, the magnesium-silicon composite oxide particles exhibit a first element content ratio of a about 0.09 to about 0.15, a second element ratio of about 1.2 to about 1.6, and a phase fraction ratio of about 0.4 to about 0.6. In certain embodiments, the magnesium-silicon composite oxide particles exhibit a first element content ratio of about 0.09 to about 0.15, a second element ratio of about 1.2 to about 1.6, and a phase fraction ratio of about 0.45 to about 0.56.

In certain embodiments, the magnesium-silicon composite oxide particles in an anode active material exhibit a first element content ratio of about 0.07 to about 0.11, a second element content ratio of about 1.2 to about 1.6, and a phase fraction ratio of about 0.4 to about 0.6. In certain embodiments, the magnesium-silicon composite oxide particles exhibit a first element content ratio of about 0.07 to about 0.11, a second element content ratio of about 1.2 to about 1.6, and a phase fraction ratio of about 0.45 to about 0.56.

By including $MgSiO_3$ and/or $Mg_2SiO_4$ in amounts as prescribed according to any equation or embodiment herein, the capacity characteristics and output characteristics of a secondary battery manufactured with an active anode material comprising the magnesium-silicon composite oxide particles may be improved while, at the same time, expansion of silicon during charging and discharging of the secondary battery is sufficiently suppressed, thereby resulting in a secondary with enhanced performance, such as enhanced initial capacity efficiency, initial discharge capacity, and improved lifespan characteristics, such as capacity retention rate. For example, in certain embodiments, a secondary battery manufactured with an active anode material comprising the magnesium-silicon composite oxide particles as described herein may exhibit a capacity retention rate (at the 50th cycle) of at least about 85%, such as about 85% to about 96%. In certain embodiments, a secondary battery manufactured with an active anode material comprising the magnesium-silicon composite oxide particles as described herein may exhibit an initial capacity efficiency of at least about 80%, at least about 82%, or at least about 84%, such as about 80% to about 89.5%, about 82% to about 89.5%, or about 84% to about 89.5%. In certain embodiments, a secondary battery manufactured with an active anode material comprising the magnesium-silicon composite oxide particles as described herein may exhibit an initial discharge capacity of at least about 1000 mAh/g, such as about 1000 mAh/g to about 1325 mAh/g. In certain embodiments, a secondary battery manufactured with an active anode material comprising the magnesium-silicon composite oxide particles exhibit an initial discharge capacity of about 1100 mAh/g to about 1325 mAh/g.

In certain embodiments, a secondary battery manufactured with an active anode material comprising the magnesium-silicon composite oxide particles as described herein exhibits two or three of the following characteristics (1) a capacity retention rate (at the 50th cycle) of at least about 85%; (2) an initial capacity efficiency of at least about 80%; and (3) an initial discharge capacity of at least about 1000 mAh/g. In certain embodiments, a secondary battery manufactured with an active anode material comprising the magnesium-silicon composite oxide particles as described herein exhibits all three of the above characteristics.

In certain embodiments, a secondary battery manufactured with an active anode material comprising the magnesium-silicon composite oxide particles as described herein exhibits two or three of the following characteristics (1) a capacity retention rate (at the 50th cycle) of 85% to about 96%; (2) an initial capacity efficiency of about 82% to about 89.5%; and (3) an initial discharge capacity of about 1100 mAh/g to about 1325 mAh/g. In certain embodiments, a secondary battery manufactured with an active anode material comprising the magnesium-silicon composite oxide particles as described herein exhibits all three of the above characteristics.

In some embodiments, the magnesium-silicon composite oxide particles may further include a carbon coating, formed on all or a portion of the surface of each of the particles. In certain embodiments, including such a coating may improve the electrical conductivity of the magnesium-silicon composite oxide particles, thereby enhancing the initial capacity efficiency of the secondary battery into which the magnesium-silicon composite oxide particles are incorporated. In addition, side reactions between the silicon and water may be suppressed, thereby improving the lifespan characteristics of the secondary battery.

In one embodiment, the carbon coating may include at least one of carbon and a conductive polymer. For example, the conductive polymer may include polyacetylene, polyaniline, polypyrrole, polythiophene, and the like. These may be used alone or in combination of two or more thereof.

The anode active material may include the magnesium-silicon composite oxide particles in an amount of about 1% by weight (wt%) to about 50 wt%, about 5 wt% to about 40 wt%, or about 10 wt% to about 40 wt%. In certain embodiments, anode active material includes the magnesium-silicon composite oxide particles in an amount of about 10 wt% to about 20 wt%, such as about 15 wt%. Within these weight ranges, a high capacity retention rate and high output characteristics of the lithium secondary battery may be achieved.

In some embodiments, and in addition to the magnesium-silicon composite oxide particles, the anode active material may further include graphite-based particles. The graphite-based particles may include at least one selected from the group consisting of natural graphite and artificial graphite. Suitable graphite-based particles may have any shape, such as an amorphous, planar, spherical, fibrous, or any other shape. In certain embodiments, the total weight of the magnesium-silicon composite oxide particles and the graphite-based particles may be about 3 wt% or more, about 5 wt% or more, about 10 wt% or more, about 15 wt% or more, about 20 wt% or more, about 25 wt% or more, about 30 wt% or more, about 35 wt% or more, about 40 wt% or more, or about 45 wt% or more based on the total weight of the anode active material.

In certain embodiments, the total weight of the magnesium-silicon composite oxide particles and the graphite-based particles may be about 99 wt% or less, about 98 wt% or less, about 96 wt% or less, about 95 wt% or less, about 85 wt% or less, about 80 wt% or less, about 75 wt% or less, about 70 wt% or less, about 65 wt% or less, about 60 wt% or less, about 55 wt% or less, or about 50 wt% or less based on the total weight of the anode active material. In certain embodiments, the total weight of the magnesium-silicon composite oxide particles and the graphite-based particles may be about 90 wt% to about 96 wt%.

As will be described in further detail below, the anode active material may further include one or more of a binder, conductive agent, thickener, or other additive agent known to one of skill in the art.

In one embodiment, the anode active material of a secondary lithium battery may be substantially composed of or substantially consist of magnesium-silicon composite oxide particles (as described according to any embodiment disclosed herein) and graphite-based particles, e.g., comprise at least 95 wt% of magnesium-silicon composite oxide particles and the graphite-based particles based on the total weight of the anode active material. In one embodiment, the anode active material consists of magnesium-silicon composite oxide particles (as described according to any embodiment disclosed herein) and graphite-based particles.

Hereinafter, an exemplary method for manufacturing the anode active material according to the above-described exemplary embodiments will be described in more detail, although one of skill in the art will recognize that certain steps may be altered in certain ways without substantially affecting the outcome of the step or method described.

In one embodiment, a silicon source and a magnesium source may be mixed.

For example, a silicon source may include silicon (Si) particles and/or $SiO_2$ particles. Examples of magnesium sources include, e.g., at least one selected from the group consisting of Mg, $Mg(OH)_2$, and MgO. In certain embodiments, the silicon source and magnesium source are mixed in a powder form.

In some embodiments, the mixture thus formed may be calcined at a temperature of about 500°C to 1600°C for about 1 hour to about 12 hours under an inert atmosphere (e.g., nitrogen) and reduced pressure (e.g., about 1 Pa to about 50 Pa).

In some embodiments, the calcined mixture may then be cooled, pulverized, and classified to yield magnesium-silicon composite oxide particles.

Also provided herein is a lithium secondary battery comprising an anode active material as described herein, and a cathode comprising a cathode current collector and a cathode active material layer formed on at least one surface of the cathode current collector.

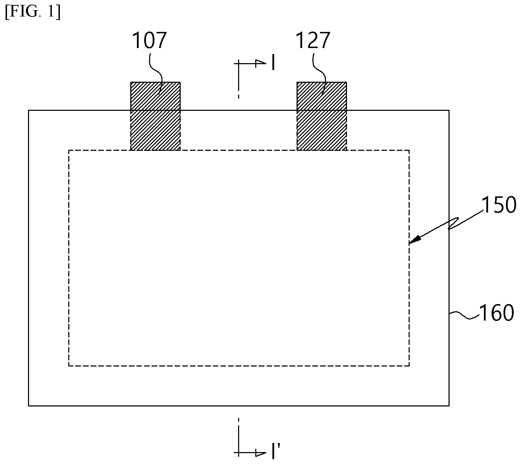

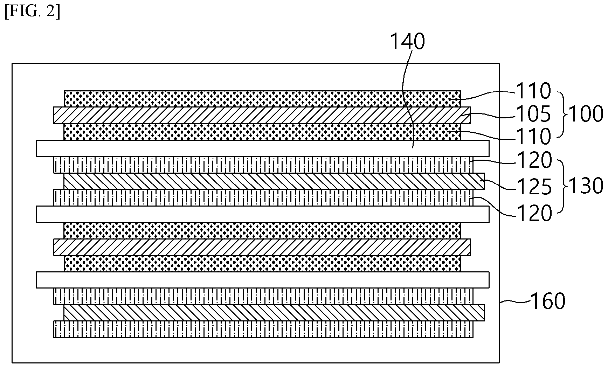

FIGs. 1 and 2 provide an exemplary schematic plan view and a cross-sectional view, respectively, illustrating a lithium secondary battery comprising an anode active material as described herein. More particularly, FIG. 2 depicts a cross-sectional view taken from line I-I' of FIG. 1 in a thickness direction of the lithium secondary battery.

As shown in FIG. 2, the lithium secondary battery includes an anode 130 comprising an anode active material as described according to any embodiment herein and a cathode 100 disposed to face the anode 130. The cathode 100 includes a cathode current collector 105 and a cathode active material layer 110 formed on at least one surface of the cathode current collector 105.

The material used for the current cathode collector is not particularly limited and may be any known in the art. In certain embodiments, the cathode current collector includes stainless steel, nickel, aluminum, titanium, or an alloy thereof. The cathode current collector may also include aluminum or stainless steel subjected to surface treatment with carbon, nickel, titanium, or silver. Likewise, the thickness of the cathode current collector is not particularly limited. In certain embodiments, the cathode current collector has a thickness of about 10 μm to about 50 μm.

The cathode active material layer may include a cathode active material, which in certain embodiments, may include any compound known in the art capable of reversibly intercalating and de-intercalating lithium ions. In certain embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or crystal structure represented by Formula 1 below.

[Formula 1]     $Li_xNi_aM_bO_{2+z}$

In Formula 1, x, a, b, and z may be in a range of $0.9 \leq x \leq 1.2$, $0.5 \leq a \leq 0.99$, $0.01 \leq b \leq 0.5$, and $-0.5 \leq z \leq 0.1$, respectively. As described above, M may include Co, Mn and/or Al.

The chemical structure represented by Formula 1 indicates a bonding relationship between elements included in the layered structure or crystal structure of the cathode active material and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements and is a formula encompassing introduction and substitution of the additional elements.

In one embodiment, the cathode active material may further include auxiliary elements that are added to components described herein, to enhance chemical stability of the cathode active material or the layered structure/crystal structure. The auxiliary elements may be incorporated into the layered structure/crystal structure together to form a bond, and it should be understood that this case is also included within the chemical structure range represented by Formula 1.

Non-limiting examples of auxiliary elements that may be incorporated into the cathode active material include Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and/or Zr. The auxiliary element or elements may contribute to the capacity/output activity of the cathode active material, together with Co or Mn, like Al.

In one embodiment, the cathode active material or the lithium-nickel metal oxide includes a layered structure or crystal structure represented by Formula 1-1 below.

$$[\text{Formula 1-1}] \qquad Li_xNi_aM1_{b1}M_2{2b}O_{2+z}$$

In Formula 1-1, M1 includes Co, Mn, and/or Al. M2 includes one or more of the auxiliary elements as described above. In Formula 1-1, x, a, b, and z may be in a range of $0.9 \leq x \leq 1.2$, $0.6 \leq a \leq 0.99$, $0.01 \leq b1+b2 \leq 0.4$, and $-0.5 \leq z \leq 0.1$, respectively.

In certain embodiments, the cathode active material may further include a coating element or a doping element. For example, elements which are substantially the same as or similar to the above-described auxiliary elements may be used as the coating element or the doping element and may be used alone or in combination of two or more thereof as a coating or doping element.

The coating element or the doping element may exist on the surface of the lithium-nickel metal oxide particles or may penetrate through the surface of the lithium-nickel metal oxide particles included in the bonding structure represented by the Formula 1 or Formula 1-1 above.

In certain embodiments, the cathode active material includes nickel to influence the output and capacity of the lithium secondary battery into which it is incorporated. Accordingly, in some embodiments, the cathode active material includes nickel-cobalt-manganese (NCM)-based lithium oxide, for example, an NCM-based lithium oxide with an increased content of nickel. By employing a high nickel content (high-Ni) composition in the cathode active material, a high-capacity cathode and a high-capacity lithium secondary battery may be provided.

However, in certain embodiments, there is a limit on the amount of nickel that may be used. For example, as the content of Ni is increased, long-term storage stability and life-span stability of the cathode or the secondary battery may decrease and side reactions with the electrolyte may increase. Accordingly, in exemplary embodiments, the life-span stability and capacity retention characteristics may be improved by incorporating Mn and electrical conductivity may be maintained by including Co.

In certain embodiments, therefore, the nickel content (mole fraction of nickel based on the total moles of nickel, cobalt, and manganese) in the NCM-based lithium oxide may be about 0.5 or more, about 0.6 or more, about 0.7 or more, or about 0.8 or more. In some embodiments, the Ni content may be about 0.8 to about 0.95, about 0.82 to about 0.95, about 0.83 to about 0.95, about 0.84 to about 0.95, about 0.85 to about 0.95, or about 0.88 to about 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include a lithium (Li)-rich layered oxide (LLO)/over lithiated oxide (OLO)-based active material, a manganese (Mn)-rich active material, or a cobalt (Co)-less active material. These materials may be used alone or in combination of two or more thereof and have a chemical structure or crystal structure represented by Formula 2 below.

$$[\text{Formula 2}] \qquad p[Li_2MnO_3](1-p)[Li_qJO_2]$$

In Formula 2, p and q are in a range of $0 < p < 1$, $0.9 \leq q \leq 1.2$, respectively, and J may include at least one element among Mn, Ni, Co, Fe, Cr, V, Cu, Zn, Ti, Al, Mg, and B.

The cathode active material may be prepared by mixing component materials in a solvent to prepare a cathode slurry. In addition to those listed above, in certain embodiments, the cathode active material layer may further include a binder, and optionally further include a conductive material, a thickener, or the like.

Non-limiting examples of suitable binders for use in the cathode active material include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR), and the like. These may be used alone or in combination of two or more thereof. In one embodiment, a PVDF-based binder may be used as the cathode binder. In this case, the amount of binder needed to form the cathode active material layer may be decreased and the amount of the cathode active material may be relatively increased, thereby improving output characteristics and capacity characteristics of the secondary battery.

Conductive material may be included in the cathode active material layer to enhance the conductivity thereof and/or the mobility of lithium ions or electrons. Non-limiting examples of suitable conductive materials include carbon-based conductive materials, such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$, and $LaSrMnO_3$. These may be used alone or in combination of two or more thereof.

Non-limiting examples of suitable solvents for preparing the cathode slurry include N-methyl-2-pyrrolidone (NMP), dimethylformamide, dimethylacetamide, *N,N*-dimethylaminopropylamine, ethylene oxide, tetrahydrofuran, and the like.

The cathode slurry may further include a thickener and/or dispersant. In one embodiment, a thickener, such as carboxymethyl cellulose (CMC) is added to the cathode slurry.

The cathode slurry may be applied to at least one surface of a cathode current collector, followed by drying and pressing the same to prepare the cathode active material layer. The coating process may include any method, such as gravure coating, slot die coating, simultaneous multilayer die coating, imprinting, doctor blade coating, dip coating, bar coating, or casting, etc.

In the secondary lithium battery, the anode active material as described herein may be deposited on at least one surface of an anode current collector of an anode.

The material used for the anode cathode collector is not particularly limited and may be any known in the art. For example, the anode current collector may include a copper foil, a nickel foil, a stainless-steel foil, a titanium foil, a nickel foam, a copper foam, a polymer substrate coated with conductive metal, or the like. These may be used alone or in combination of two or more thereof. Likewise, the thickness of the anode current collector is not particularly limited. In certain embodiments, the anode current collector may have a thickness of about 10 μm to about 50 μm.

Turning back to **FIG. 2,** the anode **130** includes an anode current collector **125** and an anode active material layer **120** formed on at least one surface of the anode current collector **125.** Anode active material layer **120** includes an anode active material comprising the magnesium-silicon composite oxide particles described according to any embodiment disclosed herein.

The anode active material may be prepared by mixing component materials in a solvent to prepare an anode slurry. In addition to those listed above, in certain embodiments, the anode active material layer may further include a binder, and optionally further include a conductive material, a thickener, or the like.

Non-limiting examples of suitable binders for use in the anode active material include an SBR-based binder, CMC, polyacrylic acid-based binder, poly(3,4-ethylenedioxythiophene, PEDOT)-based binder, and the like may be used as an anode binder. These may be used alone or in combination of two or more thereof.

Non-limiting examples of suitable solvents for preparing the anode slurry include water, pure water, deionized water, distilled water, ethanol, isopropanol, methanol, acetone, n-propanol, t-butanol and the like. These may be used alone or in combination of two or more thereof.

The anode slurry may be applied/deposited onto an anode current collector, followed by drying and pressing the same to prepare an anode active material layer. The coating process may include any known method, such as gravure coating, slot die coating, simultaneous multilayer die coating, imprinting, doctor blade coating, dip coating, bar coating or casting, etc.

In exemplary embodiments, such as shown in **FIG. 2,** a separation membrane **140** may be interposed between the cathode **100** and the anode **130.** The separation membrane **140** may be configured to prevent an electrical short between the cathode **100** and the anode **130,** and to allow a flow of ions to occur. In certain embodiments, the separation membrane may have a thickness of about 10 μm to about 20 μm.

In certain embodiments, the separation membrane includes a porous polymer film or a porous nonwoven fabric. Non-limiting examples of suitable porous polymer films include a polyolefin polymer, such as an ethylene polymer, a propylene polymer, an ethylene/butene copolymer, an ethylene/hexene copolymer, and an ethylene/methacrylate copolymer, etc. These may be used alone or in combination of two or more thereof. Non-limiting examples of suitable porous nonwoven fabric include glass fibers having a high melting point, polyethylene terephthalate fibers, and the like.

In certain embodiments, the separation membrane **140** may also include a ceramic-based material. For example, inorganic particles may be applied to the polymer film or dispersed within the polymer film to improve heat resistance.

The separation membrane **140** may have a single-layer or multi-layer structure, wherein one or more of the layers includes the polymer film and/or non-woven fabric described herein.

Referring still to **FIG. 2,** an electrode cell is defined by the cathode **100,** the anode **130,** and the separation membrane **140.** A plurality of electrode cells may then be stacked to form, for example, a jelly roll type electrode assembly

150 as shown in **FIG. 1.** For example, the electrode assembly **150** may be formed by winding, stacking, z-folding, stack-folding, etc. of the separation membrane **140** in **FIG. 2.**

The electrode assembly **150** may be housed in a case **160** together with an electrolyte to define a lithium secondary battery. According to exemplary embodiments, a non-aqueous electrolyte may be used as the electrolyte. Suitable non-aqueous electrolyte may include, in certain embodiments, a lithium salt of an electrolyte and an organic solvent, wherein the lithium salt is represented by, for example, $Li^+X^-$, wherein $X^-$ is the anion of the lithium salt and may be, for example, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ or $(CF_3CF_2SO_2)_2N^-$.

Non-limiting examples of suitable organic solvents include propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite, and the like. These may be used alone or in combination of two or more thereof.

A non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound, or the like. These may be used alone or in combination of two or more thereof. Examples of cyclic carbonate compounds include vinylene carbonate (VC), vinyl ethylene carbonate (VEC), etc. Examples of fluorine-substituted cyclic carbonate compounds include fluoroethylene carbonate (FEC), etc. Examples of sultone compounds include 1,3-propane sultone, 1,3-propene sultone, 1,4-butane sultone, etc. Examples of cyclic sulfate compound include 1,2-ethylene sulfate, 1,2-propylene sulfate, etc. Examples of cyclic sulfite compounds include ethylene sulfite, butylene sulfite, etc. Examples of phosphate compounds include lithium difluoro bis-oxalato phosphate, lithium difluoro phosphate, etc. Examples of borate compounds include lithium bis(oxalate) borate, etc.

In certain embodiments, a solid electrolyte may be used instead of a non-aqueous electrolyte. In this case, the lithium secondary battery may be manufactured in the form of an all-solid-state battery. In such embodiment, a solid electrolyte layer may be disposed between the cathode and the anode instead of a separation membrane. The anode of such an all-solid-state battery may comprise an anode active layer as described according to any embodiment disclosed herein, e.g., comprising magnesium-silicon composite oxide particles having first element content ratio, second element content ratio and phase fraction ratio according to the ranges described herein.

The solid electrolyte in an all-solid-state battery may include a sulfide-based electrolyte. Non-limiting examples of sulfide-based electrolytes include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li2O, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (wherein m and n are positive numbers and Z is Ge, Zn, or Ga), $Li_2S$-$GeS_2$, $Li_2S$-$SiS_2$-$Li_3PO_4$, $Li_2S$-$SiS_2$-$Li_pMO_q$ (p and q are positive numbers and M is P, Si, Ge, B, Al, Ga or In), $Li_7$-$xPS_6$-$xCl_x$ (wherein $0 \leq x \leq 2$), $Li_7$-$xPS_6$-$xBr_x$ (wherein $0 \leq x \leq 2$), $Li_7$-$xPS_6$-$xI_x$ (wherein $0 \leq x \leq 2$), etc. These may be used alone or in combination of two or more thereof.

In one embodiment, the solid electrolyte includes an oxide-based amorphous solid electrolyte, such as, for example, $Li_2O$-$B_2O_3$-$P_2O_5$, $Li_2O$-$SiO_2$, $Li_2O$-$B_2O_3$, or $Li_2O$-$B_2O_3$-ZnO, etc.

As shown in **FIG. 2,** electrode tabs (a cathode tab and an anode tab) may protrude from the cathode current collector **105** and the anode current collector **125,** respectively, which belong to each electrode cell, and may extend to one side of the case **160.** The electrode tabs may be fused together with the one side of the case **160** to form electrode leads (a cathode lead **107** and an anode lead **127** as shown in **FIG. 1**) extending or exposed to an outside of the case **160.**

The lithium secondary battery may be manufactured in any configuration, for example, in a cylindrical shape using a can, a square shape, a pouch type or a coin shape.

Hereinafter, experimental examples including specific examples and comparative examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

7. **Examples**

**Example 1**

**Preparation of magnesium-silicon composite oxide particles**

A raw material obtained by mixing Si powder, $SiO_2$ powder and Mg powder was input into a reactor, followed by performing calcination under reduced pressure condition of 10 Pa and a temperature of 1000 °C for 9 hours to form a mixture.

The weight ratio of the input Si powder, $SiO_2$ powder and Mg powder was adjusted so as to have the first element content ratio and the second element content ratio as described in Table 2 below. The weight ratio of the Si powder and the $SiO_2$ powder was 1: 1.

The mixture was precipitated on an adsorption plate and cooled sufficiently, then the precipitate was taken out. The precipitate was pulverized and classified using a ball mill to prepare magnesium-silicon composite oxide particles.

**Preparation of anode**

95.5 wt% of an anode active material comprising (1) 15 wt% of the magnesium-silicon composite oxide particles and (2) 80.5 wt% of artificial graphite was mixed with 1 wt% of flake type CNTs as a conductive agent, 2 wt% of SBR as a binder, and 1.5 wt% of CMC as a thickener to obtain an anode slurry.

The anode slurry was applied to a copper substrate, followed by drying and pressing the same to prepare an anode.

**Manufacture of a lithium half cell**

A lithium half-cell including the anode and using lithium (Li) metal as a counter electrode (cathode) was manufactured.

Specifically, a lithium coin half-cell was constructed by interposing a separation membrane (polyethylene, thickness: 20 μm) between the prepared anode and lithium metal (thickness: 1 mm).

A combination of lithium metal/separation membrane/anode was put in a coin cell plate, an electrolyte was injected, and then a cap was covered and clamped. The electrolyte was fabricated by preparing a 1.0 M $LiPF_6$ solution using a mixed solvent of EC/EMC (3:7; volume ratio), and then adding 2.0 vol% of fluoroethylene carbonate (FEC) thereto based on the total volume of the electrolyte. The manufactured lithium half-cell was impregnated for 3 to 24 hours after clamping, then 3 cycles of charging and discharging at 0.1C were performed thereon (charging condition: CC-CV 0.1C 0.01 V 0.01C CUT-OFF, discharging condition: CC 0.1C 1.5 V CUT-OFF).

**Examples 2 to 16, and Comparative Examples 1 to 4**

The weight ratio of the Si powder, $SiO_2$ powder, and Mg powder of the raw materials was adjusted to have the first element content ratio and the second element content ratio as described in **Table 2** below.

Magnesium-silicon composite oxide particles, anodes and lithium half-cells were manufactured in the same manner as in Example 1, except for varying the weight ratio of the Si powder, $SiO_2$ powder, and Mg powder according to Table 2.

**Example 17**

The magnesium-silicon composite oxide particles were input into a thermal CVD chamber, and heat treatment was performed at less than 600 °C while supplying a mixed gas of ethylene gas and argon to prepare magnesium-silicon composite oxide particles having a carbon coating formed on the surface portion thereof.

Magnesium-silicon composite oxide particles, an anode and a lithium half-cell were manufactured in the same manner as in Example 1, except for varying the weight ratio of the Si powder, $SiO_2$ powder, and Mg powder according to Table 2.

**Experimental Example**

**(1) Measurement of first element content ratio and second element content ratio**

For the magnesium-silicon composite oxide particles prepared according to the examples and comparative examples, contents of silicon and magnesium elements were measured through ICP analysis.

Specifically, the magnesium-silicon composite oxide particle sample, nitric acid, and a small amount of hydrofluoric acid were input into a polypropylene (PP) tube, and the tube was sealed by turning a stopper. The PP tube was shaken well and left at room temperature, followed by dissolving the sample. After the sample was dissolved, the PP tube was stored in a refrigerator to cool the sample. Saturated boric acid water was added to the cooled sample to neutralize the hydrofluoric acid, and then the sample was diluted with ultrapure water. The carbon component remaining in the sample was removed with a 0.45 μm syringe filter to obtain an injection solution.

The obtained injection solution was injected into an ICP analyzer (NexION 350S, PerkinElmer) to measure $C_{Mg}$ and $C_{Si}$ in the magnesium-silicon composite oxide particles.

Specifically, a high-temperature (approximately 10,000 K or lower) argon plasma was generated using an induced magnetic field (RF frequency) in the ICP analyzer. The injection solution was injected into the ICP analyzer in an aerosol state to acquire a mass ratio and a charge ratio of cations, and a signal intensity of each ratio was detected.

The measurement conditions of the ICP analyzer were set as follows:

 i) Induced magnetic field generation device (RF generator): 40 MHz free-running ICP source Quadruple-stage vacuum system; and
 ii) Detector: Quadruple ion detector.

For the magnesium-silicon composite oxide particles prepared according to the examples and comparative examples, Co was measured through EA (LECO ONH836, 836 Series Elemental Analyzer) analysis.

Specifically, the content of the oxygen element was measured by analyzing the gas generated by melting and oxidation/reduction reaction of the magnesium-silicon composite oxide particle sample at about 3000 °C in an electric furnace.

The $C_{Mg}$, $C_{Si}$, and $C_O$ were substituted into Equations 1 and 2 to calculate a first element content ratio and a second element content ratio.

**(2) Measurement of phase fraction ratio**

The Rietveld analysis method t was performed on the magnesium-silicon composite oxide particles prepared according to the examples and comparative examples to determine a phase fraction of each of $MgSiO_3$, $Mg_2SiO_4$, and Si.

XRD patterns of the $MgSiO_3$ phase, $Mg_2SiO_4$ phase and Si phase were compared with the XRD patterns of the reference codes of $MgSiO_3$, $Mg_2SiO_4$ and Si (ICSD 98-000-5203, ICSD 98-000-9685 and ICSD 98-024-6975) registered in the online database (ICSD, https:Hicsd.products.fiz-karlsruhe.de/en/products/icsd-products) to determine the phase fractions of each of $MgSiO_3$, $Mg_2SiO_4$ and Si.

Phase fraction ratio was calculated by substituting the sum of the phase fraction of $MgSiO_3$ and the phase fraction of $Mg_2SiO_4$ (P(MS)), and the phase fraction of Si (P(Si)) into Equation 3.

Specific XRD analysis equipment/conditions are as described in **Table 1** below.

[TABLE 1]

| XRD (X-Ray Diffractometer) | |
|---|---|
| Maker | PANalytical |
| Model | EMPYREAN |
| Anode material | Cu |
| K-Alpha1 wavelength | 1.540598 Å |
| Generator voltage | 45 kV |
| Tube current | 40 mA |
| Scan Range | 10-70° |
| Scan Step Size | 0.0065° |
| Divergence slit | 1/4° |
| Antiscatter slit | 1° |

**(3) Evaluation of initial discharge capacity and initial capacity efficiency**

Charging (CC-CV 0.1C 0.01V 0.01C CUT-OFF) and discharging (CC 0.1C 1.5 V CUT-OFF) were respectively performed on the lithium half-cells manufactured according to the examples and comparative examples once at room temperature (25°C) to measure an initial charge capacity and an initial discharge capacity.

The initial efficiency was evaluated by a percentage obtained by dividing the initial discharge amount by the initial charge amount measured above.

**(4) Evaluation of capacity retention rate (50 cycles)**

Charging (CC-CV 0.1C 0.01V 0.01C CUT-OFF) and discharging (CC 0.1C 1.5 V CUT-OFF) were respectively performed on the lithium half-cells manufactured according to the examples and comparative examples 50 times at room temperature (25°C) to measure a discharge capacity. A rest time of 10 minutes was set between each cycle. The capacity retention rate was calculated as a percentage by dividing the discharge capacity measured at 50th cycle by the initial discharge capacity measured in (3) above.

Measurement and evaluation results are shown in Tables 2 and 3 below.

[TABLE 2]

|  | First element content ratio | Second element content ratio | Phase fraction ratio |
|---|---|---|---|
| Example 1 | 0.07 | 1.4 | 0.40 |
| Example 2 | 0.09 | 1.4 | 0.44 |
| Example 3 | 0.11 | 1.4 | 0.48 |
| Example 4 | 0.13 | 1.4 | 0.51 |
| Example 5 | 0.15 | 1.4 | 0.55 |
| Example 6 | 0.17 | 1.4 | 0.60 |
| Example 7 | 0.11 | 0.8 | 0.60 |
| Example 8 | 0.11 | 1.0 | 0.59 |
| Example 9 | 0.11 | 1.2 | 0.56 |
| Example 10 | 0.11 | 1.6 | 0.47 |
| Example 11 | 0.11 | 1.8 | 0.45 |
| Example 12 | 0.11 | 0.7 | 0.59 |
| Example 13 | 0.11 | 1.9 | 0.43 |
| Example 14 | 0.11 | 2.2 | 0.41 |
| Example 15 | 0.11 | 1.4 | 0.38 |
| Example 16 | 0.11 | 1.4 | 0.61 |
| Example 17 | 0.11 | 1.4 | 0.41 |
| Comparative Example 1 | 0.03 | 1.4 | 0.34 |
| Comparative Example 2 | 0.05 | 1.4 | 0.40 |
| Comparative Example 3 | 0.19 | 1.4 | 0.60 |
| Comparative Example 4 | 0.21 | 1.4 | 0.65 |

[TABLE 3]

|  | Initial discharge capacity (mAh/g) | Initial capacity efficiency (%) | Capacity retention rate (%, at 50th cycle) |
|---|---|---|---|
| Example 1 | 1248 | 84.6 | 95.4 |
| Example 2 | 1220 | 85.2 | 95.0 |
| Example 3 | 1175 | 86.4 | 96.0 |
| Example 4 | 1158 | 87.0 | 94.6 |
| Example 5 | 1132 | 88.5 | 94.0 |
| Example 6 | 1110 | 89.2 | 95.4 |
| Example 7 | 1021 | 84.0 | 88.2 |

(continued)

| | Initial discharge capacity (mAh/g) | Initial capacity efficiency (%) | Capacity retention rate (%, at 50th cycle) |
|---|---|---|---|
| Example 8 | 1050 | 84.8 | 89.4 |
| Example 9 | 1105 | 85.1 | 95.5 |
| Example 10 | 1201 | 86.6 | 95.6 |
| Example 11 | 1225 | 87.0 | 94.2 |
| Example 12 | 1006 | 80.1 | 88.0 |
| Example 13 | 1260 | 87.1 | 85.3 |
| Example 14 | 1295 | 87.1 | 83.0 |
| Example 15 | 1315 | 82.0 | 87.7 |
| Example 16 | 1002 | 81.3 | 88.1 |
| Example 17 | 1324 | 87.5 | 95.5 |
| Comparative Example 1 | 1435 | 71.2 | 78.1 |
| Comparative Example 2 | 1320 | 78.3 | 80.5 |
| Comparative Example 3 | 1030 | 83.2 | 79.4 |
| Comparative Example 4 | 1002 | 84.5 | 75.2 |

Referring to Tables 2 and 3, in those examples exhibiting a first element content ratio of the magnesium-silicon composite oxide particles of 0.07 to 0.17, the initial capacity efficiency and capacity retention rate were improved as a whole when compared to the comparative examples.

In Example 12, in which the second element content ratio was less than 0.8, the initial discharge capacity and initial capacity efficiency were relatively decreased.

In Examples 13 and 14, in which the second element content ratio exceeded 1.8, the lifespan characteristics were relatively decreased.

In Example 15, in which the phase fraction ratio was less than 0.4, the initial capacity efficiency and lifespan characteristics were relatively decreased.

In Example 16, in which the phase fraction ratio exceeded 0.6, the initial discharge capacity, initial capacity efficiency, and lifespan characteristics were relatively decreased.

In Example 17, in which a carbon coating was formed on the surface of the magnesium-silicon composite oxide particles, the initial discharge capacity and initial capacity efficiency were relatively improved.

In Comparative Example 2, in which the phase fraction ratio was the same as Example 1, but the first element content ratio was less than 0.07, the initial capacity efficiency and lifespan characteristics were decreased compared to Example 1.

In Comparative Example 3, in which the phase fraction ratio was the same as Example 6, but the first element content ratio exceeded 0.15, the initial discharge capacity, initial capacity efficiency and capacity retention rate were decreased compared to Example 6.

## Claims

1. An anode active material for a lithium secondary battery, comprising magnesium-silicon composite oxide particles, wherein the magnesium-silicon composite oxide particles comprise $MgSiO_3$ and silicon, and are **characterized by** a first element content ratio of 0.07 to 0.17, as defined by Equation 1:

[Equation 1]

$$\text{First element content ratio} = C_{Mg}/(C_{Mg}+C_{Si}+C_{O}),$$

wherein:

$C_{Mg}$ is a content by weight of magnesium in the magnesium-silicon composite oxide particles and based on the total weight of the magnesium-silicon composite oxide particles;

$C_{Si}$ is a content by weight of silicon in the magnesium-silicon composite oxide particles based on the total weight of the magnesium-silicon composite oxide particles; and

$C_O$ is a content by weight of oxygen in the magnesium-silicon composite oxide particles based on the total weight of the magnesium-silicon composite oxide particles.

2. The anode active material for a lithium secondary battery according to claim 1, wherein the first element content ratio is 0.09 to 0.15.

3. The anode active material for a lithium secondary battery according to claim 1 or claim 2, wherein the first element content ratio is 0.07 to 0.11.

4. The anode active material for a lithium secondary battery according to one of claims 1 to 3, wherein $C_{Mg}$ and $C_{Si}$ are each measured through inductively coupled plasma (ICP) analysis and $C_O$ is measured through elemental analysis (EA).

5. The anode active material for a lithium secondary battery according to one of claims 1 to 4, wherein the magnesium-silicon composite oxide particles are **characterized by** a second element content ratio of 0.8 to 1.8, as defined by Equation 2:

[Equation 2]

$$\text{Second element content ratio} = C_{Si}/C_O.$$

6. The anode active material for a lithium secondary battery according to claim 5, wherein the second element content ratio is 1.2 to 1.6.

7. The anode active material for a lithium secondary battery according to one of claims 1 to 6, wherein the magnesium-silicon composite oxide particles further comprise $Mg_2SiO_4$.

8. The anode active material for a lithium secondary battery according to claim 7, wherein the magnesium-silicon composite oxide particles are **characterized by** a phase fraction ratio of 0.4 to 0.6, as defined by Equation 3:

[Equation 3]

$$\text{Phase fraction ratio} = P(MS)/(P(MS)+P(Si)),$$

wherein:

P(MS) is a sum of a phase fraction of the $MgSiO_3$ and a phase fraction of the $Mg_2SiO_4$ in the magnesium-silicon composite oxide particles; and

P(Si) is a phase fraction of the silicon in the magnesium-silicon composite oxide particles.

9. The anode active material for a lithium secondary battery according to claim 8, wherein the phase fraction of the $MgSiO_3$, $Mg_2SiO_4$, and silicon are obtained by the Rietveld refinement method.

10. The anode active material for a lithium secondary battery according to claim 8 or claim 9, wherein the phase fraction ratio is 0.45 to 0.56.

11. The anode active material for a lithium secondary battery according to one of claims 1 to 10, wherein the magnesium-silicon composite oxide particles further include a carbon coating formed on a surface portion thereof.

12. The anode active material for a lithium secondary battery according to one of claims 1 to 11, further comprising graphite-based particles.

13. The anode active material for a lithium secondary battery according to claim 12, wherein the graphite-based particles include at least one selected from the group consisting of natural graphite and artificial graphite.

14. A lithium secondary battery comprising:

a cathode; and
an anode facing the cathode and comprising the anode active material of one of claims 1 to 13.

[FIG. 1]

107      I      127

150

160

I'

[FIG. 2]

Europäisches
Patentamt

European
Patent Office

Office européen
des brevets

# EUROPEAN SEARCH REPORT

**Application Number**

EP 24 21 9247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 565 170 A (GUANGDONG KAIJIN NEW ENERGY TECH CO LTD) 8 August 2023 (2023-08-08) * paragraphs [0006], [0067] - [0085]; claims 1-10 * | 1-14 | INV. H01M4/36 H01M4/38 H01M4/48 H01M10/0525 |
| A | US 2017/149059 A1 (DUTTA INDRAJIT [US] ET AL) 25 May 2017 (2017-05-25) * paragraphs [0019], [0089]; claims 1-26 * | 1-14 | ADD. H01M4/02 |

**TECHNICAL FIELDS SEARCHED (IPC)**

H01M

The present search report has been drawn up for all claims

| Place of search | Date of completion of the search | Examiner |
|---|---|---|
| Munich | 30 April 2025 | Szekely, Noemi Kinga |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 9247

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | Publication date | Patent family member(s) | Publication date |
|---|---|---|---|
| CN 116565170 A | 08-08-2023 | NONE | |
| US 2017149059 A1 | 25-05-2017 | NONE | |

EPO FORM P0459

For more details about this annex : see Official Journal of the European Patent Office, No. 12/82